# EUROPÄISCHE PATENTSCHRIFT

(11) **EP 4 296 172 B1**
(45) Veröffentlichungstag und Bekanntmachung des Hinweises auf die Patenterteilung: **06.11.2024**
(21) Anmeldenummer: 23208324.6
(22) Anmeldetag: 31.05.2021
(51) Int. Cl.: B64G 1/64

(54) **AUSLÖSEVORRICHTUNG**
RELEASE DEVICE
DISPOSITIF DE DÉCLENCHEMENT

(43) Veröffentlichungstag der Anmeldung: 27.12.2023
(62) Teilanmeldung aus: 21176976.5
(73) Patentinhaber: EXOLAUNCH GmbH, 10785 Berlin (DE)
(72) Erfinder: STERNHARZ, Dmitriy, 10785 Berlin (DE); SCHWARZ, Peter, 5023 Salzburg (AT); WIMMER, Peter, 5452 Pfarrwerfen (AT); GRUBER, Johannes, 5020 Salzburg (AT)
(74) Vertreter: Manitz Finsterwald Patent- und Rechtsanwaltspartnerschaft mbB

(56) Entgegenhaltungen:
- CN-A- 110 329 552
- DE-A1- 102016 108 606
- US-A- 4 682 804
- US-A- 5 040 748
- US-A- 5 226 617

## Beschreibung

Die vorliegende Erfindung betrifft eine Auslösevorrichtung nach dem Oberbegriff des Anspruchs 1 zum Freisetzen eines Satelliten, umfassend einen von einer Auslösefeder vorspannbaren Auslösestößel, der von zwei um jeweils eine Schwenkachse verschwenkbaren zweiarmigen Schwenkhebeln in einer vorgespannten Stellung gehalten wird, wobei jeder Schwenkhebel von einem Auslöseelement gegen die Kraft einer Feder in einer Haltestellung gehalten werden kann.

Eine derartige Auslösevorrichtung ist beispielsweise aus der DE 10 2016 108 606 A1 bekannt und dient dort zum Auslösen von Haltebolzen eines Deckels, um einen Satelliten freizusetzen bzw. auszuwerfen. Eine weitere Auslösevorrichtung zum Freisetzen eines Satelliten ist aus der WO 2021/089167 A1 bekannt. Bei der in diesem Stand der Technik beschriebenen Vorrichtung wird mit Hilfe der Auslösevorrichtung ein an einem Ring befestigter Satellit ausgeworfen, indem die Auslösevorrichtung einen federbelasteten Schwenkriegel freigibt.

Auslösevorrichtungen der vorstehend beschriebenen Art werden üblicherweise mittels Trägerraketen in den Orbit transportiert und unterliegen dabei unter Umständen hohen Schockbelastungen. Es ist deshalb die Aufgabe der vorliegenden Erfindung, eine Auslösevorrichtung der eingangs genannten Art zu schaffen, die auch bei hohen Schockbelastungen eine ordnungsgemäße Auslösung gewährleistet.

Die Lösung dieser Aufgabe erfolgt durch die Merkmale des Anspruchs 1.

Erfindungsgemäß liegen die Schwenkhebel in der Haltestellung an einer Sperrwippe an, die an dem Auslösestößel befestigt ist. Durch eine solche Sperrwippe kann erreicht werden, dass nach Betätigen eines Auslöseelements nur einer der Schwenkhebel verschwenkt wird, woraufhin die Sperrwippe nicht mehr von beiden Schwenkhebeln gehalten wird, so dass diese verschwenkt und dadurch ein Verschieben des Auslösestößels ermöglicht. Hierdurch kann der Auslösestößel selbst als einstückiges Bauteil ausgebildet werden.

Der Auslösestößel ist von einer festen Rolle geführt, die die Kraft eines federbelasteten Riegels aufnimmt. Hierdurch ist sichergestellt, dass der Auslösestößel in seiner vorgespannten Stellung nicht von Seitenkräften beaufschlagt wird oder ungewünschten Biegungen unterliegt.

Vorteilhafte Ausführungsformen der Erfindung sind in der Beschreibung, der Zeichnung sowie den Unteransprüchen beschrieben.

Nach einer ersten vorteilhaften Ausführungsform ist ein Arm jedes Schwenkhebels mit einem Zusatzgewicht versehen. Mit einem derartigen Zusatzgewicht lässt sich die Masse an beiden Armen eines Schwenkhebels so einstellen bzw. verteilen, dass der zweiarmige Schwenkhebel bei einer Stoßbelastung bzw. Schockbelastung keinem oder nur einem äußerst geringen Drehmoment ausgesetzt ist, da sich die Drehmomente zu beiden Seiten der Schwenkachse eines Schwenkhebels kompensieren. Hierdurch kann eine versehentliche Auslösung der Auslösevorrichtung bei stoßartigen Belastungen verhindert werden.

Nach einer weiteren vorteilhaften Ausführungsform kann die Masse und Position des Zusatzgewichts so gewählt sein, dass der Schwerpunkt jedes Schwenkhebels einschließlich aller mit diesem verbundenen Teile im Bereich seiner Schwenkachse liegt. So können beispielsweise an dem Schwenkhebel Anbauteile angebracht sein, die beispielsweise mit dem Auslöseelement zusammenwirken. Berücksichtigt man die Masse aller mit dem Schwenkhebel fest verbundenen Komponenten, d.h. aller Komponenten, die sich zusammen mit dem Schwenkhebel verschwenken, so lässt sich die Masse und die Position des Zusatzgewichts an dem Schwenkhebel so wählen, dass ein auf die Auslösevorrichtung bzw. den Schwenkhebel ausgeübter Stoß nicht dazu führt, dass sich der Schwenkhebel ungewünscht dreht und von dem Auslöseelement löst.

Nach einer weiteren vorteilhaften Ausführungsform kann das Zusatzgewicht Wolfram aufweisen und insbesondere aus Wolfram oder aus einer Wolframlegierung bestehen. Aufgrund des hohen spezifischen Gewichts eignet sich Wolfram besonders gut für die Herstellung des Zusatzgewichts, da dieser Werkstoff eine außerordentlich hohe Dichte aufweist und somit auch ermöglicht, dass die gesamte Auslösevorrichtung kompakt gebaut werden kann.

Nach einer weiteren vorteilhaften Ausführungsform kann ein Rastelement vorgesehen sein, das die Schwenkwippe beispielsweise in einer Ruhestellung oder aber in einer verschwenkten Stellung arretiert. Ein solches Rastelement kann beispielsweise federbelastet sein und dafür sorgen, dass die Schwenkwippe nach der Auslösung in ihrer verschwenkten Position gehalten wird und nicht ungewünscht von selbst zurückschwenkt, wodurch unter Umständen eine erneute Verriegelung des Auslösestößels blockiert würde. Alternativ oder zusätzlich kann die Sperrwippe auch in ihrer Ruheposition einrasten, in der beide Schwenkhebel an der Schwenkwippe anliegen und diese von zwei Seiten symmetrisch halten, so dass der Auslösestößel von der Auslösefeder nicht in die Auslösestellung gedrückt werden kann.

Nach einer weiteren vorteilhaften Ausführungsform kann die Auslösevorrichtung in einem geschlossenen Gehäuse angeordnet sein, das mit mehreren mechanischen Indikatoren versehen ist, welche einen Zustand der Auslösevorrichtung anzeigen. So kann beispielsweise ein Indikator vorgesehen sein, der anzeigt, ob sich der Auslösestößel in seiner vorgespannten Position oder aber in seiner Auslöseposition befindet, in der die Auslösefeder den Auslösestößel verschoben hat. Weiterhin kann zumindest ein Indikator vorgesehen sein, der für einen Bediener die Position eines Schwenkhebels anzeigt, d.h., der anzeigt, ob sich der Schwenkhebel in seiner vorgespannten Ruheposition oder aber in seiner Auslöseposition befindet, die ein Verschieben des Auslösestößels ermöglicht hat.

Nach einer weiteren vorteilhaften Ausführungsform kann zumindest ein Indikator als Betätigungselement ausgebildet sein, so dass durch eine manuelle Betätigung des Indikators beispielsweise ein Verschieben des Auslösestößels oder aber ein Verschwenken eines Schwenkhebels möglich ist. Auf diese Weise kann die Auslösevorrichtung von einem Bediener ohne zusätzliche Werkzeuge so eingestellt werden, dass der Auslösestößel von der Auslösefeder vorgespannt ist und die beiden Schwenkhebel den Auslösestößel in seiner vorgespannten Stellung halten.

Nach einer weiteren vorteilhaften Ausführungsform kann die Auslösefeder in einem Indikator untergebracht sein, so dass diese platzsparend und geschützt untergebracht ist.

Nach einer weiteren vorteilhaften Ausführungsform kann der Auslösestößel in der vorgespannten Stellung quer zu seiner Längsachse von dem federbelasteten Riegel beaufschlagt sein, was den Vorteil hat, dass die Federkraft des Riegels nicht entgegen der Federkraft des Auslösestößels wirkt. Nachdem ein solcher federbelasteter Riegel dazu dient, die Freigabe des Satelliten zu bewirken, ist ein solcher Riegel üblicherweise mit einer hohen Federkraft beaufschlagt. Da jedoch bei dieser Ausführungsform diese Federkraft quer zur Federkraft der Auslösefeder verläuft, muss diese bei einem Auslösen der Vorrichtung nicht erst überwunden werden, so dass kleinere Federn verwendet werden können.

Nach einer weiteren vorteilhaften Ausführungsform kann eine Längsachse eines Auslöseelementes, beispielsweise eines Haltemagneten, mit der Längsachse des Auslösestößels einen Winkel von etwa 15° bis 25° einschließen. Durch einen solchen relativ kleinen spitzen Winkel zwischen dem Auslöseelement und dem Auslösestößel kann eine sehr kompakte Bauweise erreicht werden.

Nach einer weiteren vorteilhaften Ausführungsform kann die Auslösevorrichtung in einem geschlossenen Gehäuse angeordnet sein, das parallel zur Längsachse des Auslösestößels eine Länge und quer dazu und quer zu den Schwenkachsen der Schwenkhebel eine Breite aufweist, wobei die Breite größer und insbesondere eineinhalbmal bis doppelt so groß wie die Länge ist. Hierdurch ist eine sehr kompakte, quaderförmige Anordnung erreicht, die so an einem Satellitenabwurfgerät montiert werden kann, dass sämtliche Massen möglichst nahe an der Montageebene angeordnet sind, was sich positiv gegen ein Aufschwingen des Systems bei niedrigen Frequenzen auswirkt.

Nach einer weiteren vorteilhaften Ausführungsform kann die Auslösevorrichtung in einem geschlossenen Gehäuse angeordnet sein, das eine Öffnung aufweist, in die ein Werkzeug zur Notentriegelung eines Schwenkhebels einführbar ist. So kann beispielsweise ein Schraubendreher zwischen das Auslöseelement und einen Schwenkhebel gesteckt werden, der von dem Auslöseelement gehalten ist, so dass der Schwenkhebel von dem Auslöseelement getrennt werden kann. Auf diese Weise ist es nicht erforderlich, das Gehäuse zu öffnen oder aber eine elektrische bzw. elektronische Auslösung zu initiieren.

Nach einer weiteren vorteilhaften Ausführungsform kann der von einer Feder vorgespannte Riegel von dem Auslösestößel in eine Freigabestellung überführbar sein, wobei zwei parallel geschaltete Sensoren, insbesondere zwei Reed-Kontakte vorgesehen sind, mit denen die Freigabestellung des Riegels detektierbar ist. Durch eine derartige Sensorik lässt sich redundant feststellen, ob die Auslösevorrichtung ordnungsgemäß ausgelöst hat und sich der Riegel ordnungsgemäß in seine Freigabestellung bewegt hat, in welcher ein Satellit ausgestoßen werden kann.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine Draufsicht auf eine Auslösevorrichtung mit geöffnetem Gehäuse und vorgespanntem Auslösestößel;
- Fig. 2: die Auslösevorrichtung von Fig. 1 im ausgelösten Zustand;
- Fig. 3: die Vorrichtung von Fig. 1 in einer anderen Teilschnittdarstellung;
- Fig. 4: die Vorrichtung von Fig. 2 in einer anderen Teilschnittdarstellung; und
- Fig. 5: eine perspektivische teilgeschnittene Darstellung der Auslösevorrichtung.

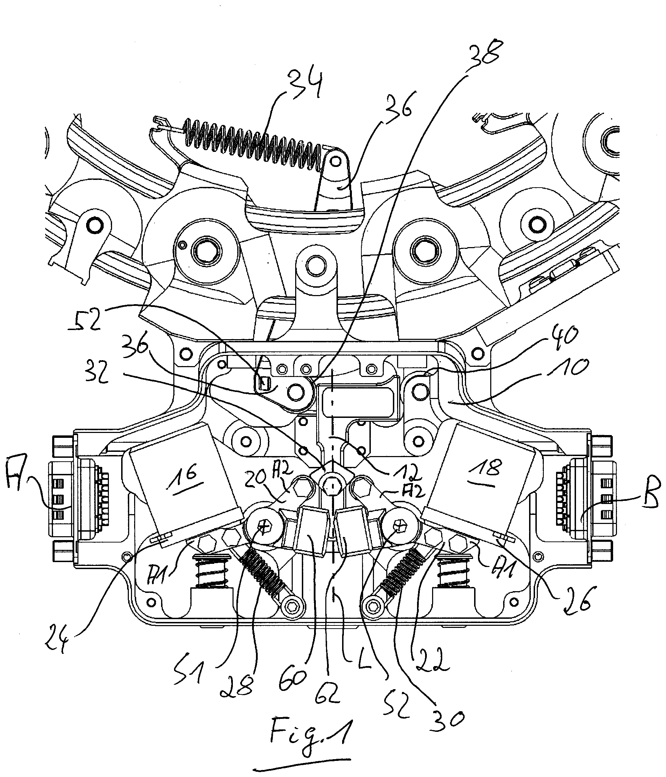

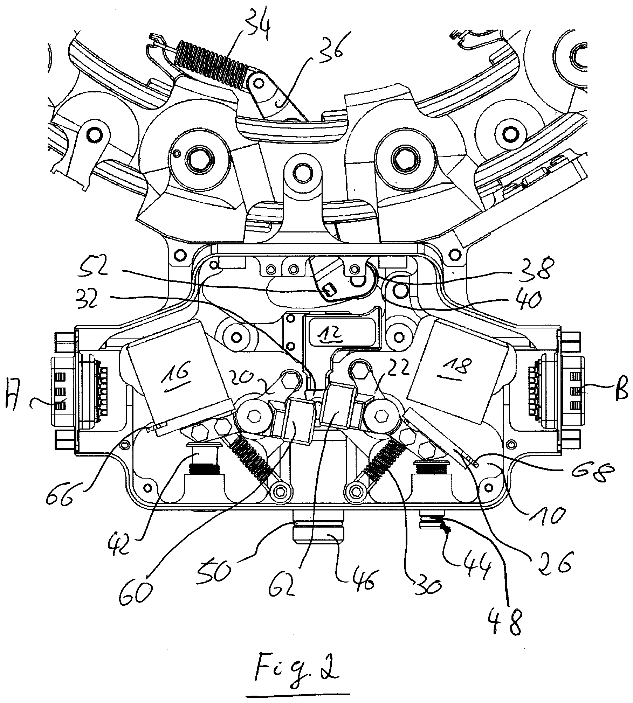

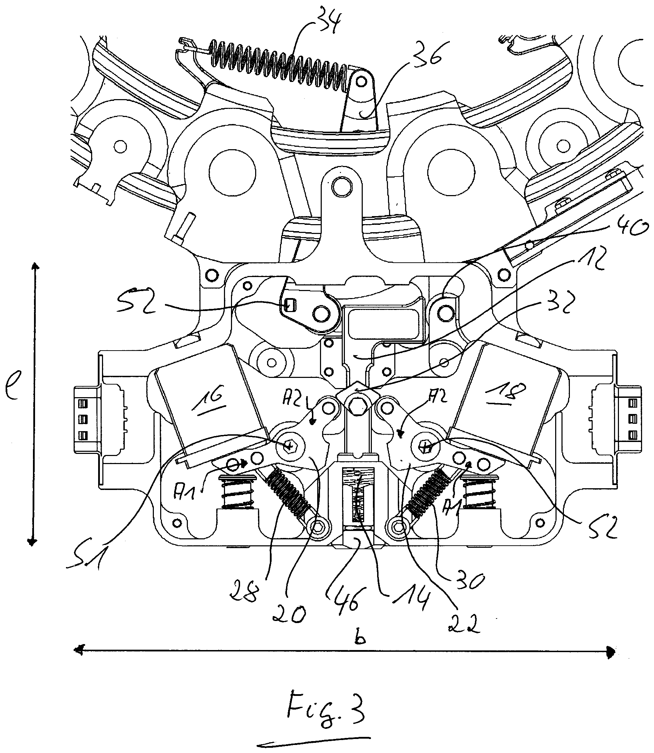

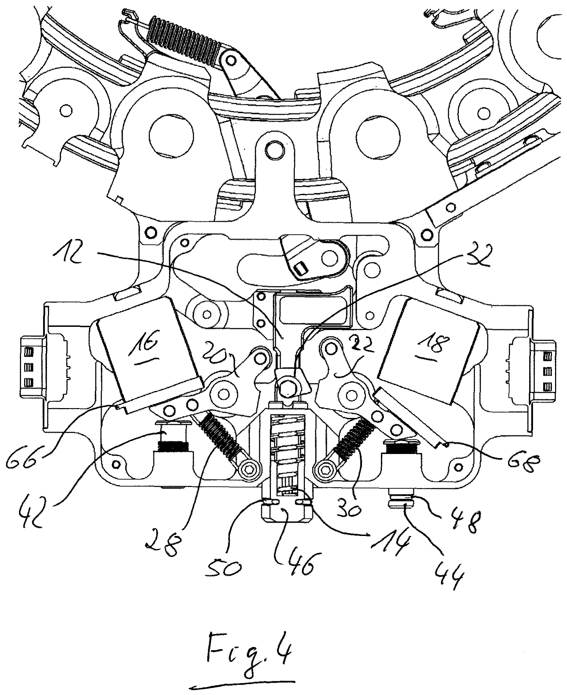

Fig. 1 zeigt eine Auslösevorrichtung zum Freisetzen eines (nicht dargestellten) Satelliten, die ein annähernd quaderförmiges Gehäuse 10 aufweist, das in den Figuren geöffnet dargestellt ist, jedoch durch einen Deckel verschlossen werden kann. In dem Gehäuse befindet sich ein linear verschiebbarer Auslösestößel 12, der von einer Auslösefeder 14 (vgl. Fig. 3 und Fig. 4) in eine vorgespannte Stellung (Fig. 1 und Fig. 3) gedrückt wird, und der durch die Auslösefeder 14 in seine ausgelöste Stellung (Fig. 2 und Fig. 4) verschoben werden kann.

Zu beiden Seiten des Auslösestößels 12 ist jeweils ein Auslöseelement in Form eines Magneten 16 und 18 angeordnet. Die beiden Magnete 16 und 18 sind beispielsweise als Permanentmagnete ausgebildet und können durch eine nicht näher dargestellte Einrichtung, beispielsweise eine elektrische Spule, mit einem magnetischen Gegenfeld beaufschlagt werden, so dass sich die Haltekraft des Magneten verringert.

Um den Auslösestößel 12 in seiner vorgespannten Position zu halten, ist zu beiden Seiten des Auslösestößels 12 jeweils ein zweiarmiger Schwenkhebel 20 und 22 vorgesehen, wobei jeder Schwenkhebel um eine zu einer Längsachse L des Auslösestößels 12 senkrecht verlaufende Schwenkachse S1 und S2 verschwenkbar ist. An einem Arm A1 jedes Schwenkhebels 20, 22 ist eine Kontaktplatte 24, 26 angebracht, die aus ferromagnetischem Material besteht und im stromlosen Zustand von dem zugehörigen Magneten 16, 18 angezogen und gehalten wird. Hierdurch wird jeder Schwenkhebel 20, 22 gegen die Kraft einer Feder 28, 30 in der in den Fig. 1 und 3 dargestellten Haltestellung gehalten, in welcher der Auslösestößel 12 in seiner vorgespannten Stellung gehalten wird.

Zu diesem Zweck liegt der jeweils andere Arm A2 jedes Schwenkhebels 20, 22 an einer annähernd rautenförmigen Sperrwippe 32 an, die an dem Auslösestößel 12 verschwenkbar befestigt ist und zwar um eine Achse, die parallel zu den Schwenkachsen S1 und S2 verläuft.

Wie die Fig. 1 und Fig. 3 weiterhin verdeutlichen, liegt an einem Ende des Auslösestößels 12 ein von einer Feder 34 belasteter Schwenkriegel 36 an, der sich in den Fig. 1 und Fig. 3 in seiner verriegelten Stellung befindet. Wenn sich der Auslösestößel 12 durch die Kraft der Feder 14 in Fig. 1 bzw. 4 entlang der Längsachse L nach unten bewegt hat, verschwenkt der Schwenkriegel 36 durch die Kraft der Feder 34 in die in den Fig. 2 und 4 dargestellte Stellung und gibt dadurch eine Komponente einer (nicht näher dargestellten) Satellitenauswurfeinheit frei, wie sie beispielsweise in dem eingangs genannten Stand der Technik beschrieben ist.

Die Anlage des Schwenkriegels 36 an dem Auslösestößel 12 erfolgt über eine an dem Schwenkriegel 36 befestigte Rolle 38, die im nicht ausgelösten Zustand an dem Auslösestößel 12 anliegt und eine Kraft senkrecht zur Längsachse L ausübt. Um diese Kraft aufzunehmen, ist der Auslösestößel 12 von einer in dem Gehäuse 10 gelagerten festen Rolle 40 geführt, so dass auf den Auslösestößel 12 keine Querkräfte ausgeübt werden.

Wie ein Vergleich der Fig. 1 und 2 oder der Fig. 3 und 4 zeigt, verschiebt sich der Auslösestößel 12 bei Betätigen der Auslöseeinrichtung (in den Figuren nach unten), so dass der Schwenkriegel 36 mit seiner Rolle 38 nicht mehr an dem Auslösestößel 12 anliegt, sondern gezogen von der Feder 34 verschwenken kann, wodurch der Satellit freigegeben wird.

Im Betrieb ist die vorstehend beschriebene Auslöseeinrichtung durch einen nicht dargestellten Gehäusedeckel verschlossen und eine im Inneren des Gehäuses 10 vorgesehene Elektronik ist über die dargestellten elektrischen Steckverbinder A und B mit einer Auslöseelektronik verbunden. Um jedoch bei geschlossenem Gehäuse dennoch erkennen zu können, in welcher Position sich der Auslösestößel 12 und die Schwenkarme 20 und 22 befinden, sind bei dem dargestellten Ausführungsbeispiel insgesamt drei Indikatoren 42, 44 und 46 vorgesehen, die gleichzeitig als Betätigungselemente ausgebildet sind. Die Indikatoren 42 bis 46 sind durch das Gehäuse 10 hindurchgeführt und federbelastet. Wenn sich die Schwenkhebel 20 und 22 in ihrer vorgespannten Stellung (Fig. 1 und Fig. 3) befinden, in der die Kontaktplatten 24, 26 an den Magneten 16, 18 anliegen, werden die Indikatoren 42 und 44 von ihren Federn in Richtung des Gehäuseinneren gedrückt, so dass diese nicht aus dem Gehäuse 10 vorstehen. Im ausgelösten Zustand (vgl. Fig. 2 und Fig. 4) ist jedoch der Indikator 44 durch den Schwenkhebel 22 aus dem Gehäuse 10 herausgedrückt worden, so dass von außen erkennbar ist, dass sich der Schwenkhebel 22 in einer ausgelösten Stellung befindet. Gleichzeitig ist es möglich, durch Betätigen des Indikators 44 den Schwenkhebel 22 gegen die Kraft seiner Feder 30 zurückzuschwenken, so dass dieser mit seiner Halteplatte 26 wieder an dem Magneten 18 anliegt und von diesem gehalten wird. Dieselbe Funktionalität liegt für den Indikator 42 vor.

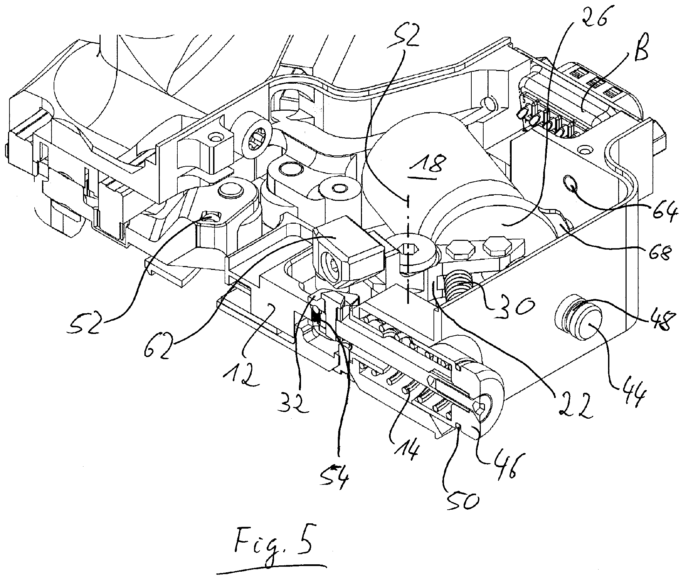

Wie insbesondere die Fig. 3 bis 5 verdeutlichen, ist die Auslösefeder 14 in dem Indikator 46 untergebracht. Somit kann die Auslösefeder 14 durch einen Druck auf den Indikator 46 zusammengedrückt werden, wodurch sich der Auslösestößel 12 linear entlang seiner Längsachse L (in Fig. 5 nach links) verschiebt, während ein Ende der Auslösefeder 14 an einer gehäusefesten Wand anliegt. Hierdurch ist ein manuelles Vorspannen des Auslösestößels 12 möglich.

Nachfolgend wird die Betriebsweise der vorstehend beschriebenen Auslösevorrichtung beschrieben.

Um die vorstehend beschriebene Auslösevorrichtung in einen betriebsbereiten Zustand zu bringen, muss zunächst der Auslösestößel 12 in seine vorgespannte Stellung verschoben und dort gehalten werden. Hierzu wird zunächst der Indikator 46 gegen die Kraft der Auslösefeder 14 aus der in Fig. 2 dargestellten Position entlang der Längsachse L in Richtung des Gehäuseinneren gedrückt, so dass sich der Auslösestößel 12 und die Sperrwippe 32 etwa in der in Fig. 1 dargestellten Position befinden. Hieraufhin kann der erste Indikator 42 und/oder der zweite Indikator 44 ebenfalls in das Gehäuseinnere gedrückt werden, so dass die Schwenkhebel 20 und 22 gegen die Kraft der Federn 28 und 30 verschwenkt werden, bis die Kontaktplatten 24 und 26 an den Magneten 16 und 18 anliegen und von diesen gehalten werden. Diese Position ist dann erreicht, wenn die an den Indikatoren 42 und 44 vorgesehenen Markierungen 48 nicht mehr sichtbar sind. In diesem Zustand kann der Indikator 46 losgelassen werden, so dass die Sperrwippe 32 von den Armen A2 der Schwenkhebel 20 und 22 von beiden Seiten gleichmäßig gehalten wird. In diesem Zustand ist auch die Markierung 50 des Indikators 46 nicht mehr sichtbar und die Auslösevorrichtung befindet sich in dem in den Fig. 1 und Fig. 3 dargestellten Zustand.

Zum Auslösen wird über die dargestellten elektrischen Steckverbinder A oder B ein elektrisches Auslösesignal an die im Inneren des Gehäuses 10 vorgesehene Steuerelektronik gesendet, woraufhin durch eine elektrische Spule oder dergleichen das Magnetfeld des Magneten 16 oder des Magneten 18 so weit geschwächt wird, dass sich die zugehörige Kontaktplatte 24, 26 von dem Magneten löst und der zugehörige Schwenkhebel durch die Feder 28 oder 30 verschwenkt wird. Wird beispielsweise die Haltekraft des Magneten 18 geschwächt, so löst sich die Kontaktplatte 26 von dem Magneten 18 und der Schwenkhebel 22 verschwenkt im Uhrzeigersinn um seine Schwenkachse S2. Hierdurch rollt eine am Ende des kurzen Arms A2 des Schwenkhebels 22 vorgesehene Rolle von der Seite der Sperrwippe 32 ab, wodurch der Auslösestößel 12 nicht mehr in seiner Stellung gehalten wird. Durch die Kraft der Feder 14 wird der Auslösestößel 12 entlang seiner Längsachse L (in den Fig. 1 und 3) nach unten gezogen, woraufhin die Sperrwippe 32 ebenfalls im Uhrzeigersinn verschwenkt wird und der Auslösestößel 12 sich in die in Fig. 2 und Fig. 4 dargestellte Position begibt. In dieser Position ist der Schwenkriegel 36 nicht mehr gehalten, so dass dieser durch die Kraft der Feder 34 entgegen dem Uhrzeigersinn verschwenkt wird, bis sich dieser in der in den Fig. 2 und Fig. 4 gezeigten Position befindet. In dieser Position ist die nicht näher dargestellte Auswurfeinheit entriegelt und der Satellit kann (üblicherweise durch die Kraft von Federn) ausgeworfen werden.

Sollte die Auslösung durch einen der beiden Magneten aus irgendwelchen Gründen nicht erfolgreich sein, so kann der jeweils andere Magnet in seinem Magnetfeld geschwächt werden, um dennoch eine Auslösung zu erreichen.

Um überprüfen zu können, ob die Vorrichtung ordnungsgemäß ausgelöst hat, ist bei dem dargestellten Ausführungsbeispiel in dem Schwenkriegel 36 ein Magnet 52 verbaut. Bewegt sich der Schwenkriegel 36 in die in den Fig. 2 und Fig. 4 dargestellte Position, so befindet sich der Magnet 52 im Bereich von zwei parallel geschalteten Reed-Sensoren, die an einer nicht dargestellten Elektronikplatine im Gehäuse angeordnet sind. Hierdurch kann eine redundante Überwachung des Auslösevorgangs erfolgen. Nur wenn sich der Schwenkriegel 36 in der ausgelösten Position befindet, erzeugen beide Reed-Sensoren ein Schaltsignal, das von der zugehörigen Elektronik ausgewertet und ausgelesen werden kann.

Um zu verhindern, dass die Sperrwippe 32 nach dem Auslösevorgang selbstständig zurückschwenkt und somit unter Umständen den Auslösestößel vor einer erneuten Verriegelung blockiert, ist in dem Auslösestößel 12 eine Rasteinrichtung 54 (Fig. 5) vorgesehen, welche die Sperrwippe in ihrer Auslösestellung (Fig. 1 und Fig. 3) sowie in ihrer ausgelösten Stellung (Fig. 2 und Fig. 4) arretiert. Hierzu ist in dem Auslösestößel 12 eine Feder untergebracht, welche eine Kugel mit Kraft beaufschlagt, die in jeweils eine Vertiefung der Sperrwippe 32 eingreifen kann. Die Sperrwippe 32 besitzt also bei dem dargestellten Ausführungsbeispiel drei definierte Rastpositionen.

Wie die Figuren erkennen lassen, sind die als Auslöseelemente dienenden Magnete 16, 18 nicht parallel, sondern unter einem spitzen Winkel zur Längsachse L des Auslösestößels 12 angeordnet. Bei dem dargestellten Ausführungsbeispiel beträgt der Winkel zwischen einer Längsachse jedes Magneten etwa 20°, so dass eine sehr kompakte Anordnung erzielt ist. Gleichzeitig ist die Anordnung so getroffen, dass die durch die Auslösefeder 14 ausgeübte Kraft von der Sperrwippe 32 auf die Schwenkhebel so übertragen wird, dass diese in Richtung der Schwenkachse S1 und S2 verläuft und deshalb von der zugehörigen Welle aufgenommen wird. Es entstehen somit keine Öffnungszwangskräfte, die auf die Kontaktplatten 24 oder 26 übertragen würden.

Um zu verhindern, dass bei stoßartigen Erschütterungen ein Drehmoment auf die Schwenkhebel 20 und 22 ausgeübt wird, welches unerwünschte Öffnungskräfte erzeugen könnte, ist im Bereich eines Arms jedes zweiarmigen Schwenkhebels 20 und 22 ein Zusatzgewicht 60, 62 vorgesehen. Die Zusatzgewichte 60, 62 (die in den Fig. 3 und Fig. 4 aufgrund einer unterschiedlichen Schnittdarstellung nicht sichtbar sind) sind mit dem jeweiligen Schwenkhebel verschraubt (vgl. Fig. 5) und dienen dazu, durch impulsartige Schockbelastungen auftretende Kräfte so zu kompensieren, dass der jeweilige Schwenkhebel hierdurch kein Drehmoment erfährt. Besonders bevorzugt ist hierbei, dass die Masse und die Position des Zusatzgewichtes (relativ zur Schwenkachse S1 oder S2) so gewählt ist, dass der Schwerpunkt jedes Schwenkhebels 20, 22 einschließlich aller mit diesem verbundenen Teile wie beispielsweise der Kontaktplatten 24 und 26 im Bereich seiner Schwenkachse S1 oder S2 liegt. Die Zusatzgewichte 60 und 62 dienen somit als Ausgleichsgewichte für die Kontaktplatten 24 und 26. Da sich der Massenschwerpunkt jedes Schwenkhebels somit im Bereich seiner Schwenkachse S1 oder S2 befindet, werden die Schwenkhebel bei impulsartigen Schockbelastungen nicht unerwünscht verschwenkt. Sofern keine schockartigen Stoßbelastungen zu erwarten sind, kann die vorstehend beschriebene Auslösevorrichtung selbstverständlich auch ohne die Zusatzgewicht verwendet werden. Eine solche Ausführungsform wird ebenfalls und explizit als erfindungsgemäß angesehen.

Aufgrund des sehr geringen zur Verfügung stehenden Bauraums ist bei der dargestellten Auslösevorrichtung ein sehr voluminöses Zusatzgewicht oder ein großer Abstand zur Schwenkachse nicht möglich. Deshalb ist es bevorzugt, wenn das Zusatzgewicht einen Werkstoff mit einer hohen spezifischen Dichte aufweist, beispielsweise Wolfram oder eine Wolframlegierung.

Falls zu Test- oder sonstigen Zwecken eine stromlose Entriegelung der Auslösemechanik erforderlich ist, können die Kontaktplatten 24 und 26 von den Magneten 16 und 18 auch manuell entkoppelt werden, ohne das Gehäuse 10 zu öffnen.

Hierzu weist das Gehäuse zwei seitliche Öffnungen 64 (Fig. 5) auf, durch die von außen ein Werkzeug, beispielsweise ein Schraubendreher gesteckt werden kann, um die Kontaktplatten 24, 26 von dem zugehörigen Magneten 16, 18 zu lösen. Um dies zu erleichtern, ist an den Kontaktplatten 24, 26 jeweils eine Lasche 66, 68 angeformt, die das Abhebeln der Kontaktplatten 24, 26 von den Magneten 16, 18 erleichtert.

## Patentansprüche

1. Auslösevorrichtung zum Freisetzen eines Satelliten, umfassend einen von einer Auslösefeder (14) vorspannbaren Auslösestößel (12), der von zwei um jeweils eine Schwenkachse (S1, S2) verschwenkbaren zweiarmigen Schwenkhebeln (20, 22) in einer vorgespannten Stellung gehalten wird, wobei jeder Schwenkhebel (20, 22) von einem Auslöseelement (16, 18) gegen die Kraft einer Feder (28, 30) in einer Haltestellung gehalten werden kann, wobei die Schwenkhebel (20, 22) in der Haltestellung an einer Sperrwippe (32) anliegen, die an dem Auslösestößel (12) befestigt ist, **dadurch gekennzeichnet, dass**
der Auslösestößel (12) von einer festen Rolle (40) geführt ist, die die Kraft eines federbelasteten Riegels (36) aufnimmt.

2. Vorrichtung nach Anspruch 1,
wobei eine Rasteinrichtung (54) vorgesehen ist, welche die Sperrwippe (32) insbesondere in einer verschwenkten Stellung arretiert.

3. Vorrichtung nach einem der vorstehenden Ansprüche,
wobei diese in einem geschlossenen Gehäuse (10) angeordnet ist, das mit mehreren mechanischen Indikatoren (42-46) versehen ist, welche einen Zustand der Auslösevorrichtung anzeigen.

4. Vorrichtung nach Anspruch 3,
wobei ein Indikator (46) die Stellung des Auslösestößels (12) und ein Indikator (42, 44) die Stellung eines Schwenkhebels (20, 22) anzeigt.

5. Vorrichtung nach einem der vorstehenden Ansprüche 3 oder 4,
wobei zumindest ein Indikator (42-46) als Betätigungselement ausgebildet ist.

6. Vorrichtung nach einem der vorstehenden Ansprüche 3 - 5,
wobei die Auslösefeder (14) in einem Indikator (46) untergebracht ist.

7. Vorrichtung nach einem der vorstehenden Ansprüche,
wobei der Auslösestößel (12) in der vorgespannten Stellung quer zu seiner Längsachse (L) von dem federbelasteten Riegel (36) beaufschlagt ist.

8. Vorrichtung nach einem der vorstehenden Ansprüche,
wobei eine Längsachse eines Auslöseelementes mit der Längsachse (L) des Auslösestößels einen Winkel von 15° - 25° einschließt.

9. Vorrichtung nach einem der vorstehenden Ansprüche,
wobei diese in einem geschlossenen Gehäuse (10) angeordnet ist, das parallel zur Längsachse (L) des Auslösestößels (12) eine Länge (I) und quer dazu und quer zu den Schwenkachsen eine Breite (b) aufweist, wobei die Breite (b) größer und insbesondere eineinhalbmal bis doppelt so groß wie die Länge (I) ist.

10. Vorrichtung nach einem der vorstehenden Ansprüche,
wobei diese in einem geschlossenen Gehäuse (10) angeordnet ist, das eine Öffnung (64) aufweist, in die ein Werkzeug einführbar ist, um einen Schwenkhebel (20, 22) von dem Auslöseelement (16, 18) manuell zu lösen.

11. Vorrichtung nach einem der vorstehenden Ansprüche,
wobei der von einer Feder (34) vorgespannte Riegel (36) von dem Auslösestößel (12) in eine Freigabestellung überführbar ist, wobei zwei parallel geschaltete Sensoren, insbesondere zwei Reed-Kontakte, vorgesehen sind, mit denen die Freigabestellung des Riegels (36) detektierbar ist.

## Claims

1. A release apparatus for releasing a satellite, said release apparatus comprising a release plunger (12) which can be preloaded by a release spring (14) and which is held in a preloaded position by two two-armed pivot levers (20, 22) pivotable about a respective pivot axis (S1, S2), wherein each pivot lever (20, 22) can be held against the force of a spring (28, 30) in a holding position by a release element (16, 18), wherein the pivot levers (20, 22) contact a locking rocker (32), which is fastened to the release plunger (12), in the holding position,
**characterized in that**
the release plunger (12) is guided by a fixed roller (40) which absorbs the force of a spring-loaded latch (36).

2. An apparatus according to claim 1,
wherein a latch device (54) is provided that locks the locking rocker (32), in particular in a pivoted position.

3. An apparatus according to one of the preceding claims,
wherein said apparatus is arranged in a closed housing (10) which is provided with a plurality of mechanical indicators (42-46) that indicate a state of the release apparatus.

4. An apparatus according to claim 3,
wherein an indicator (46) indicates the position of the release plunger (12) and an indicator (42, 44) indicates the position of a pivot lever (20, 22).

5. A apparatus according to one of the preceding claims 3 or 4,
wherein at least one indicator (42-46) is configured as an actuation element.

6. An apparatus according to any one of the preceding claims 3 to 5,
wherein the release spring (14) is accommodated in an indicator (46).

7. An apparatus according to any one of the preceding claims,
wherein, in the preloaded position, the release plunger (12) is acted on by the spring-loaded latch (36) transversely to the longitudinal axis (L) of said release plunger (12).

8. An apparatus according to any one of the preceding claims,
wherein a longitudinal axis of a release element encloses an angle of 15° - 25° with the longitudinal axis (L) of the release plunger.

9. An apparatus according to any one of the preceding claims,
wherein said apparatus is arranged in a closed housing (10) which has a length (I) in parallel with the longitudinal axis (L) of the release plunger (12) and a width (b) transverse to said longitudinal axis (L) and transverse to the pivot axes, wherein the width (b) is larger and in particular one and a half times to twice as large as the length (I).

10. An apparatus according to any one of the preceding claims,
wherein said apparatus is arranged in a closed housing (10) which has an opening (64) into which a tool can be inserted to manually release a pivot lever (20, 22) from the release element (16, 18).

11. An apparatus according to any one of the preceding claims,
wherein the latch (36) preloaded by a spring (34) can be transferred by the release plunger (12) into a release position, wherein two sensors connected in parallel, in particular two reed contacts, are provided by which the release position of the latch (36) can be detected.

## Revendications

1. Dispositif de déclenchement pour libérer un satellite, comprenant un poussoir de déclenchement (12) susceptible d'être précontraint par un ressort de déclenchement (14) et maintenu dans une position précontrainte par deux leviers pivotants à deux bras (20, 22) pouvant pivoter chacun autour d'un axe de pivotement (S1, S2), chaque levier pivotant (20, 22) pouvant être maintenu dans une position de retenue à l'encontre de la force d'un ressort (28, 30) par un élément de déclenchement (16, 18), et, dans la position de retenue, les leviers pivotants (20, 22) étant en appui contre une bascule de blocage (32) fixée au poussoir de déclenchement (12),
**caractérisé en ce que**
le poussoir de déclenchement (12) est guidé par un galet fixe (40) qui absorbe la force d'un verrou (36) chargé par un ressort.

2. Dispositif selon la revendication 1,
dans lequel est prévu un dispositif d'arrêt (54) par lequel la bascule de blocage (32) est arrêtée en particulier dans une position pivotée.

3. Dispositif selon l'une des revendications précédentes,
dans lequel celui-ci est disposé dans un boîtier fermé (10) muni d'une pluralité d'indicateurs mécaniques (42-46) indiquant un état du dispositif de déclenchement.

4. Dispositif selon la revendication 3,
dans lequel un indicateur (46) indique la position du poussoir de déclenchement (12), et un indicateur (42, 44) indique la position d'un levier pivotant (20, 22).

5. Dispositif selon l'une des revendications précédentes 3 ou 4,
dans lequel au moins un indicateur (42-46) est conçu comme un élément d'actionnement.

6. Dispositif selon l'une des revendications précédentes 3 à 5,
dans lequel le ressort de déclenchement (14) est logé dans un indicateur (46).

7. Dispositif selon l'une des revendications précédentes,
dans lequel, dans la position précontrainte, le poussoir de déclenchement (12) est sollicité transversalement à son axe longitudinal (L) par le verrou (36) chargé par un ressort.

8. Dispositif selon l'une des revendications précédentes,
dans lequel un axe longitudinal d'un élément de déclenchement forme un angle de 15° à 25° avec l'axe longitudinal (L) du poussoir de déclenchement.

9. Dispositif selon l'une des revendications précédentes,
dans lequel celui-ci est disposé dans un boîtier fermé (10) présentant une longueur (I) parallèlement à l'axe longitudinal (L) du poussoir de déclenchement (12) et une largeur (b) transversalement à celui-ci et transversalement aux axes de pivotement, la largeur (b) étant supérieure et en particulier comprise entre une fois et demie et deux fois la longueur (I).

10. Dispositif selon l'une des revendications précédentes,
dans lequel celui-ci est disposé dans un boîtier fermé (10) présentant une ouverture (64) dans laquelle un outil peut être inséré pour détacher manuellement un levier pivotant (20, 22) de l'élément de déclenchement (16, 18).

11. Dispositif selon l'une des revendications précédentes,
dans lequel le verrou (36) précontraint par un ressort (34) peut être transféré vers une position de libération par le poussoir de déclenchement (12), et il est prévu deux capteurs montés en parallèle, en particulier deux contacts Reed, permettant de détecter la position de libération du verrou (36).
